# FASCICULE DE BREVET EUROPEEN

(11) **EP 1 627 555 B1**
(45) Date de publication et mention de la délivrance du brevet: **22.11.2006**
(21) Numéro de dépôt: 04767179.7
(22) Date de dépôt: 26.05.2004
(51) Int. Cl.: H05B 3/84

(54) **ELEMENT FEUILLETE DOTE D'UNE COUCHE CHAUFFANTE**
MIT EINER GEHEIZTEN SCHICHT AUSGESTATTETES LAMINIERTES ELEMENT
LAMINATED ELEMENT PROVIDED WITH A HEATED LAYER

(30) Priorité: 28.05.2003 DE 20308376 U; 06.08.2003 DE 10335979
(43) Date de publication de la demande: 22.02.2006
(73) Titulaire: SAINT-GOBAIN GLASS FRANCE, 92400 Courbevoie (FR)
(72) Inventeur: MANN, Detlef, 91710 Gunzenhausen (DE)
(74) Mandataire: Aupetit, Muriel J. C.
(86) Numéro de dépôt international: PCT/FR2004/001301
(87) Numéro de publication internationale: WO 2004/110102

(56) Documents cités:
- EP-A- 0 490 723
- FR-A- 2 646 968
- US-A- 5 938 957
- US-A1- 2003 017 756
- US-B1- 6 455 809

## Description

L'invention concerne un élément feuilleté en plaque doté d'une couche chauffante, qui présente les caractéristiques du préambule de la revendication 1.

De tels chauffages appliqués sur du verre ou d'autres supports non conducteurs peuvent être utilisés comme corps de chauffe (par rayonnement) si la puissance de chauffage installée suffit dans ce but. Ces éléments chauffants peuvent être installés sur ou dans des parois de bâtiments ou être intégrés dans ces bâtiments en remplacement des corps de chauffage (central) habituels. Dans ce but, ils ne doivent pas être réalisés sous la forme de fenêtres et peuvent également l'être sous forme de miroirs, des surfaces décoratives, etc. Il est aussi possible d'utiliser éventuellement de tels éléments en plaque de façon générale pour produire du chauffage par des surfaces d'appareils techniques, par exemple des appareils électroménagers, leur faible hauteur de montage et leur surface lisse très aisée à nettoyer pouvant offrir de grands avantages.

L'alimentation de couches chauffantes de grande surface impose l'utilisation de tensions électriques relativement élevées. Il faut donc prévoir une isolation électrique sûre, en particulier sur les bords de la plaque concernée qui est éventuellement revêtue sur toute sa surface.

Le document DE-A1 198 60 870 décrit un élément chauffant en plaque de ce type, avec un support en verre revêtu sur toute sa surface. Pour l'isolation sûre du revêtement alimenté en électricité vers l'extérieur, une zone qui forme un cadre périphérique du revêtement est isolée par une ligne de séparation et est ainsi neutralisée électriquement. Une telle disposition protège également le revêtement de la corrosion qui y pénètre par les bords extérieurs, mais qui ne peut pénétrer que jusqu'à la ligne de séparation.

Les raccordements électriques de la couche chauffante sont mis en contact avec le revêtement situé à l'intérieur de la surface circonscrite par ce cadre, d'autres lignes de séparation définissant un parcours d'écoulement du courant de chauffage sur la totalité de la surface du revêtement. Le même document divulgue également l'option qui consiste à doter d'un revêtement électriquement conducteur plusieurs des vitres collées d'un vitrage feuilleté ou de sécurité. On n'entre cependant pas dans les détails de la mise en oeuvre pratique d'une telle vitre feuilletée, ni en ce qui concerne la mise en contact électrique ni pour la commande électrique d'un tel revêtement chauffant double.

Dans un autre élément en plaque connu (le document DE-B-2 113 876), le revêtement électriquement conducteur et chauffant ne s'étend pas jusqu'au bord de la plaque, de sorte qu'un cadre d'écartement d'un vitrage isolant peut être collé sans dispositions particulières directement sur la bordure (exempte de couche) du vitrage. Les conducteurs d'alimentation électrique des électrodes sont passés par des alésages étanches ménagés dans le cadre d'écartement. La deuxième vitre du vitrage isolant est dotée d'une couche non chauffante de protection solaire.

La demande de brevet antérieure 102 41 728.8 de la demanderesse décrit un dispositif de raccordement pour un élément feuilleté en plaque qui comprend une première vitre rigide dotée d'une couche chauffante ainsi qu'une deuxième vitre rigide reliée sur toute sa surface à la première par adhérence. Le dispositif de raccordement est inséré dans un alésage ménagé dans l'une des vitres rigides. Il comprend des contacts qui permettent d'établir un contact direct avec la couche chauffante. Dans ce but, cette dernière présente au moins deux électrodes qui sont disposées dans la zone de ladite découpe. Entre ces électrodes peut s'étendre une pluralité de parcours de courant raccordés électriquement en parallèle et ménagés dans le revêtement.

La longueur et la largeur du parcours de courant ou des parcours de courant ainsi que la conductivité des surfaces (exprimée en ohms par unité de surface) du système de couches utilisé sont déterminantes pour l'absorption de l'énergie électrique et pour la puissance de chauffage de l'élément en plaque. En fonction de la tension d'alimentation particulière disponible ou prédéterminée, on peut établir dans de larges plages différentes puissances de chauffage par le motif du parcours de courant, la température maximale admissible dépendant également du domaine d'utilisation de l'élément en plaque terminé. Si par exemple des contacts directs par l'utilisateur ne sont pas possibles ou ne doivent pas être supposés, les températures peuvent se situer nettement au-dessus de 50° C. Cependant, il faut évidemment éviter que des revêtements qui adhèrent sur la vitre revêtue, par exemple des feuilles adhésives d'un vitrage feuilleté, soient dégradés aux températures qui peuvent être atteintes en fonctionnement normal.

Dans la littérature, on mentionne différents matériaux qui conviennent pour de telles couches chauffantes. Uniquement à titre d'exemple, mentionnons ici l'oxyde d'indium et d'étain ("Indium-Tin-Oxide" - ITO) et des métaux bons conducteurs tels que l'or, l'argent, le cuivre ou l'aluminium. Les systèmes de couches dotés de couches diélectriques antiréfléchissantes et d'au moins une couche métallique située entre elles permettent une très bonne transmission de la lumière visible avec une conductivité électrique satisfaisante, mais peuvent également être utilisés en même temps comme réflecteurs de l'infrarouge. De tels systèmes habituels de couches présentent des résistances de surface comprises entre 1 et 4 Ω par unité de surface.

Lorsque ces éléments chauffants fonctionnent à haute puissance de chauffage, la couche d'adhésif, en général thermoplastique (de préférence une feuille en PVB, PMMA ou EVA), peut atteindre ses limites thermiques. L'adhérence aux surfaces (revêtues) du verre peut se relâcher lorsque la pleine puissance de chauffage est appliquée pendant un laps de temps assez long. Dans certains cas, et en particulier aux emplacements à haute densité de courant, cela peut entraîner des délaminations locales du revêtement. Comme pour des raisons de technique de production et de coût, on ne désire pas se départir des adhésifs éprouvés depuis plusieurs années en fabrication de verre feuilleté, on cherche d'autres voies pour éviter ces problèmes thermiques.

Le problème à la base de l'invention consiste à proposer un meilleur élément feuilleté en plaque doté de couches chauffantes.

Selon l'invention, ce problème est résolu avec les caractéristiques de la revendication 1. Les caractéristiques des revendications dépendantes donnent des développements avantageux de cet objet.

Tout d'abord, avec un revêtement double, on propose l'option qui consiste à obtenir la même puissance de chauffage qu'avec un revêtement simple sans augmentation notable du volume du corps de chauffe, les épaisseurs de couche étant situées dans la plage nanométrique, avec un courant par unité de surface nettement moindre pour chaque revêtement. La chaleur n'est alors pas seulement produite en une seule des couches frontières situées entre une plaque de verre et la couche d'adhésif. En outre, les électrodes de raccordement par lesquelles l'ensemble du courant doit pénétrer dans tous les parcours du courant, sont thermiquement délestées. Une autre particularité de cette configuration selon l'invention réside en ce que les deux revêtements sont mis en contact électrique par un côté plat de l'élément en plaque, par le fait que l'une des deux plaques est dotée d'une découpe qui permet de passer les raccordements extérieurs.

Dans un premier mode de réalisation avantageux de l'invention, les deux revêtements sont disposés des deux côtés de la couche d'adhésif qui relie les deux vitres rigides. Dans un deuxième mode de réalisation avantageux qui, en fonction de l'épaisseur des vitres rigides, peut donner une épaisseur totale légèrement plus grande de l'élément feuilleté en plaque, une troisième vitre rigide est prévue et au moins une couche chauffante est disposée de chaque côté de la troisième vitre rigide. En particulier, il n'est pas obligatoirement nécessaire que la vitre centrale porte les deux couches chauffantes, et l'on peut réaliser plusieurs variantes d'agencement, ainsi qu'on l'expliquera plus en détail plus loin.

On peut également réaliser d'autres combinaisons des deux variantes si une répartition encore plus poussée de la puissance de chauffage est souhaitée, et en cas de besoin et dans le cadre de la présente invention, on peut encore ajouter d'autres vitres rigides (revêtues ou non revêtues).

Dans toutes les configurations, on peut obtenir une commande contrôlée de la répartition du chauffage d'une part si les deux revêtements sont identiques et sont alimentés par des tensions d'alimentation identiques (de préférence avec la tension du réseau habituel dans le pays concerné (par exemple 110 ou 230 V -)).

Dans un développement avantageux, les revêtements qui forment chacun une ou plusieurs résistances de chauffage (parallèles) peuvent être mis en oeuvre chacun indépendamment l'un de l'autre ou être utilisés dans un circuit en série ou dans un circuit en parallèle.

Dans le dernier cas, on peut obtenir la plus haute puissance de chauffage ; on peut prévoir cette dernière par exemple pour le chauffage de l'élément chauffant encore froid et revenir à une puissance de chauffage moindre pour un fonctionnement de longue durée.

La configuration selon l'invention permet cependant aussi d'équiper les deux revêtements de propriétés complètement différentes. D'une part, ils peuvent être réalisés en des matériaux différents. Leurs résistances peuvent être réglées dans de larges plages, par exemple par sélection de la conductivité spécifique et/ou de la structure interne du système de couches, de telle sorte que même lorsqu'on leur applique la même tension d'alimentation, on obtienne différentes puissances de chauffage.

Par ailleurs, les revêtements peuvent également être réalisés en différentes épaisseurs. Ainsi, on agit également sur la résistance en surface selon que les revêtements de différentes épaisseurs sont constitués de matériaux identiques ou de matériaux différents.

En outre, en particulier dans le cas d'éléments chauffants en plaque transparente, la sélection de matériau permet également d'obtenir un aspect coloré souhaité. Par exemple, un revêtement d'or a une teinte dorée ou rouge plus ou moins prononcée, tandis que des couches d'argent ont une teinte plutôt neutre.

Il est évident que, de manière connue en soi, l'on peut également prévoir sur un élément en plaque selon l'invention plusieurs parcours de courant qui peuvent éventuellement être raccordés indépendamment les uns des autres, à l'intérieur de l'un ou des deux revêtements, pour, en cas de besoin, pouvoir brancher et débrancher la puissance de chauffage par étages. Cela dépend du nombre des contacts ou des électrodes de raccordement disponibles sur les revêtements.

Lors de la fabrication d'éléments chauffants en plaque sans fonction de fenêtre, on peut éventuellement supprimer un traitement antiréfléchissant de la couche conductrice proprement dite, qui est par exemple réalisée en argent ou en un autre métal conducteur, ce qui d'une part simplifie l'alimentation en courant (habituellement, les couches antiréfléchissantes diélectriques ne sont pas conductrices ou mauvaises conductrices), et d'autre part obtenir des effets décoratifs en surface. La détermination précise des matériaux appropriés pour le système de couches chauffantes est cependant laissée à la discrétion de l'homme du métier qui a pour tâche d'étalonner la puissance de chauffage souhaitée.

A titre de complément, on peut prévoir une ou plusieurs sondes de température pour détecter la température effective de l'élément en plaque. De telles sondes de température peuvent même être réalisées sous la forme de limiteurs de courant (par exemple des conducteurs froids dont la résistance électrique/ohmique augmente avec la température). En variante, on peut prévoir un organe de commutation distinct pour le débranchement du courant de chauffage en cas de menace de surchauffe de l'élément en plaque, cet organe pouvant être commandé par une sonde de température.

De façon particulièrement avantageuse, l'élément en plaque selon l'invention peut être équipé d'un dispositif de raccordement du type décrit dans la demande antérieure déjà mentionnée. Il est possible de mettre les deux couches chauffantes en contact simultané avec un seul dispositif de raccordement qui sera disposé dans la découpe de l'une des vitres. On peut ainsi rassembler avantageusement et de manière très compacte les raccordements électriques de l'élément chauffant. En même temps, l'élément de raccordement peut comprendre les éléments de commutation nécessaires pour la commande de la puissance de chauffage de l'élément chauffant. Ce sont en particulier des éléments de commande indépendante de l'un ou des deux revêtements, et éventuellement de plusieurs parcours de courant indépendants situés à l'intérieur de l'un ou des deux revêtements, des éléments permettant d'établir des raccordements en parallèle ou en série, ainsi qu'éventuellement des éléments de commutation commandés par thermosonde. Enfin, pour un débranchement de sécurité, on peut encore prévoir les éléments de commutation nécessaires en cas de rupture éventuelle de l'élément chauffant en verre.

Ce dispositif de raccordement a pour avantage de pouvoir être monté après la fabrication de l'élément feuilleté en plaque et de pouvoir également en être enlevé en cas de besoin. De façon particulièrement préférée, le dispositif de raccordement est équipé de moyens de contact libérables, par exemple des contacts à fiche ou à ressort. Pour les tensions d'alimentation relativement élevées de l'élément feuilleté en plaque, ils ne doivent transmettre que de petits courants (alternatifs); de plus, les éléments chauffants utilisés dans des bâtiments ne sont en règle générale pas soumis à des vibrations. Ainsi, il ne faut pas s'attendre à des problèmes de corrosion qui, dans d'autres domaines d'utilisation (construction de véhicules), peuvent avoir pour effet de freiner le contact par augmentation de la résistance de transfert. En outre, la zone de raccordement ou de contact peut en cas de besoin être: scellée hermétiquement, de sorte que ni l'humidité ni les encrassements ne puissent y pénétrer.

En cas de besoin, les contacts électriques vers les éléments fonctionnels ou selon le cas leurs électrodes peuvent cependant aussi être réalisés par brasage ou ne présenter une protection qu'à titre complémentaire. On connaît des techniques de brasage qui permettent de faire fondre de manière sûre ces emplacements de brasage sans contact direct avec la source de chaleur (brasage par induction ou par laser) ou qui peuvent être utilisés même à travers la vitre revêtue sans pour autant détruire le revêtement.

Un élément en plaque équipé selon l'invention peut être utilisé comme corps de chauffage autonome. On peut également l'intégrer dans un vitrage isolant dans lequel il est relié à une autre vitre par un cadre d'écartement. Il est évident que l'on peut également relier d'autres plaques (en verre) dans un feuilleté relié sur toute sa surface aux deux vitres rigides de l'élément chauffant en plaque sans par là quitter l'idée à la base de l'invention.

D'autres détails et avantages de l'objet de l'invention ressortent des figures d'un exemple de réalisation et d'une variante de réalisation et de la description à laquelle on procède dans ce qui suit.

Dans des représentations simplifiées et non à l'échelle,
la Figure 1 montre une vue en coupe d'un élément en plaque feuilleté selon l'invention dans la région d'un dispositif de raccordement, deux revêtements chauffants électriquement étant disposés des deux côtés d'une même couche d'adhésif, et
la Figure 2 montre une vue en coupe d'une variante de l'élément en plaque feuilleté selon l'invention doté d'une troisième vitre rigide et de deux revêtements chauffants électriquement situés des deux côtés de la plaque centrale rigide.

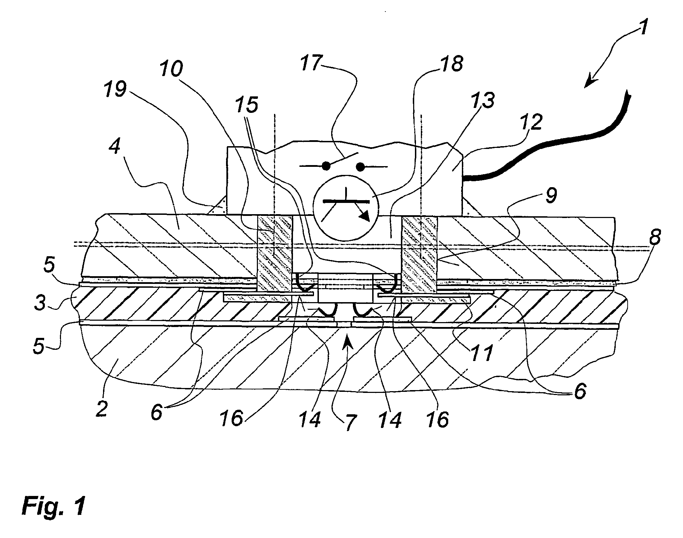

Dans la Figure 1, un élément chauffant en plaque 1 selon l'invention est réalisé sous la forme d'un vitrage feuilleté qui présente une première vitre rigide 2, une couche d'adhésif 3 et une deuxième vitre rigide 4. Les deux vitres rigides 2 et 4 sont de préférence des vitres précontraintes ou partiellement précontraintes thermiquement. Sur leur côté plat tourné vers la couche d'adhésif 3, chacune des deux vitres est dotée d'une couche chauffante 5. On n'a représenté qu'une partie de l'épaisseur de la vitre rigide 2 et une double ligne en traits interrompus transversale à la vitre rigide 4 indique que son épaisseur représentée a également été raccourcie. On comprend que ces deux vitres rigides sont nettement plus épaisses que la couche d'adhésif 3.

Les couches chauffantes 5 sont constituées de compositions et/ou de successions de couches qui résistent suffisamment aux contraintes thermiques lorsqu'elles fonctionnent comme couches chauffantes de surface et qui conviennent pour l'application particulière et éventuellement pour la précontrainte des vitres. Des systèmes de couches appropriés ont été décrits dans de nombreuses variantes dans l'état de la technique, de sorte qu'il ne faut pas s'en préoccuper davantage ici. Elles peuvent être réalisées selon une haute transmission de la lumière visible et donc être transparentes.

On peut par exemple utiliser un revêtement qui est commercialisé par la demanderesse sous la désignation "Planitherm 1,3", le nombre représentant sa valeur de k. Il s'agit d'un système de couche à haute résistance thermique et apte à être précontraint, doté d'une couche d'argent et de couches diélectriques antiréfléchissantes des deux côtés de celle-ci, et qui possède en outre des propriétés de réflexion de l'infrarouge.

Cependant, selon les besoins, on peut évidemment utiliser également d'autres systèmes de couches électriquement conductrices. Leur résistance de surface devra être comprise entre 1 et 25 ohms par unité de surface. Plus la résistance de surface est faible, plus grand peut être l'élément chauffant plat qui doit être chauffé à une tension prédéterminée.

Des moyens appropriés assurent de manière connue en soi la passivation périphérique des revêtements 5 le long du bord, non représenté ici, de l'élément en plaque 1, c'est-à-dire qu'il n'existe de contact électriquement conducteur ni avec sa surface extérieure ni avec sa surface frontale, ni de risque d'une attaque extérieure par corrosion du matériau des couches. En tout cas, à l'aide du matériau adhésif synthétique thermoplastique qui forme la couche d'adhésif 3 (par exemple le polyvinylbutyral (PVB), l'éthylène-acétate de vinyle (VA)), on obtient un recouvrement hermétique de l'interstice de bordure. On comprend que le matériau de la couche adhésive doit être sélectionné de manière à être compatible avec le matériau du revêtement 5.

La représentation en coupe montre les composants essentiels de l'alimentation électrique des deux couches chauffantes 5 dans une zone commune de raccordement. Chacune d'elles porte (au moins) deux électrodes planes 6 qui sont disposées des deux côtés d'une ligne de séparation isolante 7 qui isole l'un de l'autre deux pôles électriques des couches chauffantes 5. Les couches chauffantes 5, qui sont d'abord déposées de manière continue, sont divisées de manière connue en soi en parcours de courant par des lignes de structure ménagées ultérieurement. Cela définit les parcours de courant entre les deux paires d'électrodes 6, de telle sorte que le courant s'écoule sur toute la surface de l'élément en plaque. Les parcours de courant non représentés ici peuvent, sans le devoir, être identiques pour les deux revêtements 5.

Les électrodes 6 des deux couches 5 peuvent également, en fonction des besoins, être réalisées de la même manière ou de manières différentes. Il n'est pas nécessaire dans tous les cas d'application de faire s'écouler les mêmes courants dans les deux revêtements 5 et/ou d'attendre d'eux la même puissance de chauffage.

Les électrodes 6 proprement dites sont opaques et ne peuvent être visibles de l'extérieur. Par conséquent, elles peuvent également être configurées comme éléments décoratifs, par exemple représenter le logo d'une firme ou d'un fabricant.

A la différence de la succession de couches représentées, les électrodes 6 peuvent également être déposées en dessous des revêtements 5, c'est-à-dire avant leur dépôt sur les surfaces de verre. On peut les réaliser sous la forme de minces feuilles métalliques ou également comme bandes de pâte conductrice de sérigraphie aptes à être cuites (lors de la précontrainte des vitres). Des modes de réalisation d'électrodes appropriées, qui sont également appelées rails de collecte, ont été largement décrits dans l'état de la technique. Par coloration de la pâte conductrice de sérigraphie utilisée pour la réalisation des électrodes, on peut également obtenir des effets colorés définis.

Il est évident qu'en cas de besoin, la zone de la mise en contact électrique peut être masquée visuellement par des moyens appropriés, par exemple en plaçant en dessous d'elle un décor opaque ou en y imprimant un tel décor, ou également en utilisant une pâte de verre de teinte très foncée pour les vitres. A titre d'exemple, la vitre 4 porte dans la zone des électrodes un revêtement opaque 8 qui n'est pas électriquement conducteur et qui a été imprimé sur la surface du verre avant le dépôt du revêtement 5 et cuit lors de la précontrainte.

Dans la zone du raccordement des électrodes 6, un alésage ou une découpe 9 est ménagé(e) dans la vitre 4 et dans la couche d'adhésif 3. Il (elle) sert à faire passer les raccordements électriques extérieurs des deux paires d'électrodes 6 des deux revêtements 5. La découpe dans la couche d'adhésif 3 est dimensionnée avant de relier les deux vitres rigides 2 et 4, de telle sorte que le matériau adhésif ne pénètre pas jusqu'aux électrodes 6 par fusion. On prendra le cas échéant des dispositions de protection appropriées.

Dans l'alésage 9 de la vitre 4 est fixée une pièce d'insertion 10 en forme de douille. Sa longueur axiale correspond sensiblement à l'épaisseur de la vitre rigide 4 (quelques millimètres), et elle pénètre jusque dans le plan de la couche d'adhésif 3. Une saillie radiale 11 qui déborde vers l'extérieur accroche par l'arrière le bord de l'alésage 9, de sorte que la pièce d'insertion 10 y est fixée en correspondance géométrique pour empêcher qu'elle soit extraite.

Cette pièce d'insertion doit déjà être placée dans l'alésage 9 avant de relier les deux vitres rigides 2 et 4. Ce n'est que lors de la fusion de la couche d'adhésif thermoplastique 3 qu'elle est fixée de manière définitive. On peut voir dans le dessin que la saillie 11 est encore reprise par le matériau de la couche d'adhésif 3.

La pièce d'insertion 10 constitue la base mécanique d'une boîte de raccordement 12. Deux lignes verticales en traits interrompus indiquent une liaison vissée libérable entre les deux pièces. Un bloc de support 13 est fixé dans l'alésage de la pièce d'insertion 10 par la boîte de raccordement 12. Il forme la base de deux paires 14, 15 de contacts à ressort qui sont mis en contact avec les électrodes 6. La paire intérieure 14 de contacts à ressort est disposée à l'extrémité inférieure d'un court appendice axial du bloc de support 13. Ce dernier présente un diamètre ou une périphérie légèrement plus petit que le bloc de support 13 proprement dit. Les contacts à ressort sont placés à conduction électrique directe sur les électrodes 6 du revêtement 5 de la vitre (inférieure) 2. La tension d'alimentation ou de chauffage est amenée au revêtement de la vitre rigide 2 par ces contacts 14.

Bien que les contacts à ressort 14 suffisent pour l'utilisation prévue de l'élément chauffant des surfaces 1 (tension d'alimentation relativement élevée, courant alternatif) aux exigences d'une liaison électrique sûre et durable, en cas de besoin, ils peuvent en complément être soudés aux électrodes 6, en particulier à l'aide d'un étamage préalable approprié, la chaleur nécessaire pouvant être apportée de préférence sans contact (par induction ou par laser).

La paire extérieure de contacts à ressort 15 sort du bloc de support 13 à l'épaulement qui est formé à la transition avec son appendice. Les contacts à ressort 15 ne sont pas en contact direct avec les électrodes de surface 6 de la couche chauffante 5 de la vitre rigide (supérieure) 4, parce que ces dernières doivent se terminer des deux côtés de l'alésage 9. En revanche, la pièce d'insertion 10 possède dans ce but deux ponts de raccordement 16. D'un côté, ils pénètrent dans l'alésage de la pièce d'insertion 10. Ils se terminent des deux côtés de l'appendice du bloc de support 13 et forment les éléments directement complémentaires des contacts à ressort 15. De l'autre côté, ils traversent la paroi de la pièce d'insertion 10 et reposent des deux côtés sur la surface (supérieure) de la saillie 11 de la pièce d'insertion 10, à savoir la surface tournée vers le revêtement 5 de la vitre 4.

Après l'insertion et la fixation de la pièce d'insertion 10 dans l'alésage 9 de la vitre rigide 4 et la liaison des deux vitres rigides 2 et 4, la saillie 11 maintient les ponts de raccordement 16 en contact avec les électrodes plates (supérieures) 6. La pièce d'insertion 10 est vissée dans la boîte de raccordement 12. Ainsi, la saillie 11 est tirée sous précontrainte contre les électrodes plates 6 et cet emplacement de contact n'est pas particulièrement critique. Les surfaces des ponts de raccordement 16 en contact avec les électrodes plates 6 peuvent être rendues rugueuses ou dotées de pointes pour permettre une certaine pénétration des ponts de raccordement dans les électrodes plates 6. Ici également, ainsi qu'on l'a déjà indiqué plus haut, on peut cependant aussi réaliser par apport de chaleur une brasure de complément avec étamage préalable des ponts de raccordement et/ou des électrodes plates.

Les ponts de raccordement 16 sont de préférence intégrés fixement dans la pièce d'insertion 10 pour que le montage du dispositif de raccordement puisse être réalisé de la façon aussi simple que possible. Cela peut par exemple être obtenu par enrobage des ponts de raccordement 16 (étroites bandes de tôle) par le matériau synthétique de la pièce d'insertion 10 lors de son façonnage.

Le bloc de support 13 avec les contacts de ressort 14, 15 est inséré en position correcte dans la pièce d'insertion 10, éventuellement en étant forcé par des éléments façonnés appropriés, de telle sorte que les contacts de ressort 14, 15 entrent en contact avec l'élément complémentaire chaque fois prévu (électrode, contact de pont) et est ensuite fixé. Le bloc de support 13 peut former une entité fixe avec la boîte de raccordement 12 et être fixé en même temps que cette dernière sur la pièce d'insertion 10. Le décalage axial et radial des paires 14 et 15 de contacts de ressort, permet d'exclure des contacts directs.

Des symboles de circuit d'un commutateur 17 et d'un transistor 18 représentent l'équipement électrique ou électronique du bloc de support 13 ou de la boîte de raccordement 12 et peuvent correspondre chacun à une pluralité d'éléments correspondants. En plus du passage de la tension électrique d'alimentation depuis le câble de raccordement jusqu'aux électrodes 6, d'autres missions de commande et de commutation sont attribuées à cette partie du dispositif de raccordement. En particulier, ces éléments de commutation assurent l'alimentation contrôlée en tension de l'un ou des deux revêtements en fonction des prescriptions correspondantes de la commande externe ainsi qu'on l'a déjà expliqué plus haut.

Dans la partie de raccordement, à l'aide de la pièce d'insertion 10 et du bloc de support 13, on peut également maintenir une ou plusieurs sondes de température (non représentées) en contact avec une ou plusieurs vitres revêtues 2 et 4 pour détecter la température effective dans la zone du contact des électrodes 6.

Un élément de commutation peut alors évaluer les valeurs de mesure de la sonde de température et éventuellement débrancher au moins momentanément l'apport en courant vers l'une des couches chauffantes ou les deux si la température effective devait dépasser un seuil admissible. On peut cependant aussi prévoir un élément de commutation qui assure la protection contre des dépassements de température et qui, de manière connue en soi, limite la puissance électrique consommée à des valeurs admissibles.

Au moins un commutateur qui peut présenter une configuration électronique ou électromécanique gère l'apport de courant aux couches chauffantes. Ce commutateur peut fondamentalement être branché manuellement localement, être commandé par des capteurs, par exemple par la sonde de température ou par un dispositif de commande de fenêtre. Ainsi qu'on l'a déjà indiqué, ce dernier peut faire partie d'une régulation automatique de la température du local (installation de climatisation, etc.), mais il peut fondamentalement aussi être commandé sélectivement à la main.

Si les signaux de commande sont transmis sans fil, un récepteur approprié sera prévu dans la boîte de raccordement 8 ou dans le bloc de support 13, en plus d'un décodeur et d'autres moyens de commutation (par exemple des amplificateurs). Si les signaux de commande sont transmis par des lignes, on prévoira pour ceux-ci des organes appropriés d'évaluation, en particulier au cas où des signaux de commande sont transmis par les lignes de raccordement du secteur de toute façon prévues et doivent être filtrés sur place.

De manière particulièrement avantageuse, l'ensemble des dispositifs ou interfaces électriques est ainsi rassemblé localement dans la partie de raccordement de l'élément chauffant en plaque 1.

Après fabrication du dispositif de raccordement et vérification de son fonctionnement, si nécessaire, on peut encore rendre la transition entre la surface de la vitre et la boîte de raccordement 12 étanche par un joint d'étanchéité 19. A la différence de la représentation, on peut évidemment disposer ce joint d'étanchéité, directement entre la face inférieure de la boîte de raccordement 12 et la surface de la vitre.

Alors que la pièce d'insertion 10 peut se raccorder en pratique à chant avec la surface principale de la vitre rigide 4, la boîte de raccordement 12 déborde légèrement au-dessus de cette surface. Comme dans la plupart des cas, ce côté de l'élément chauffant plat 1 n'est pas tourné vers l'observateur ou l'utilisateur en position montée et/ou est par exemple placé en face d'une paroi ou dans celle-ci, la perception visuelle du dispositif de raccordement sur le masque (ou éventuellement sur l'électrode opaque 6 réalisée comme élément décoratif) reste limitée, et par ailleurs des risques par manipulation non autorisée ou intempestive du dispositif de raccordement sont en pratique exclus. Lorsqu'une manette d'actionnement d'un organe de commande du dispositif de raccordement doit être prévu, on disposera évidemment celle-ci de préférence en un emplacement bien accessible, par exemple à proximité du bord de l'élément chauffant plat.

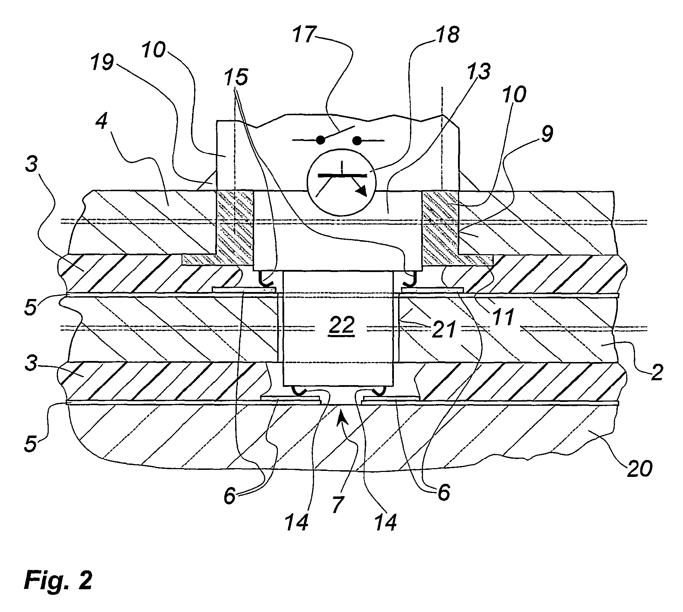

Dans la Figure 2, on a doté des éléments identiques à ceux de la Figure 1 des mêmes références numériques. Ici, l'élément feuilleté en plaque est équipé d'une troisième vitre rigide 20 (inférieure) qui est reliée par adhérence de surface à la vitre rigide centrale 2 à l'aide d'une autre couche d'adhésif 3. La surface située dans le haut dans le dessin des deux vitres rigides 2 et 20 est dotée d'un revêtement chauffant plat 5. De nouveau, les deux revêtements 5 sont chacun dotés d'une paire d'électrodes 6. Ce que l'on a dit lors de l'explication de la Figure 1 vaut également pour ce qui concerne la division des revêtements 5 et des parcours de courant entre les paires d'électrodes 6, de même que pour la commande électrique et le mode de fonctionnement en général.

Ici également, la vitre rigide 2 est traversée par un alésage 21 qui est orienté sensiblement axialement par rapport à l'alésage 9 de la vitre rigide 4. La deuxième couche d'adhésif 3 présente une découpe correspondante dans laquelle se terminent les électrodes 6 du revêtement inférieur. Un prolongement axial 22 du bloc de support 13 est inséré dans l'alésage 21 avec la boîte de raccordement et le bloc de support. Son diamètre ou selon le cas sa périphérie est plus petit (e) que celui (celle) du bloc de support 13. En face de la paroi de l'alésage 21, il présente un espace radial libre pour pouvoir compenser d'éventuels écarts entre les centres des trous forés 9 et 21 et qui pourraient découler de la fabrication de la vitre feuilletée. Il s'étend dans le sens longitudinal jusque peu avant la surface de la troisième vitre 20 qui est située dans le feuilleté. Ici également, des contacts entre les paires 14 et 15 de contacts à ressort sont exclus par un décalage axial et un décalage radial.

Les contacts à ressort 14 représentés dans la Figure 1 sont ici disposés à l'extrémité inférieure de l'appendice 22 et reposent avec une pression de contact suffisante sur les électrodes 6 du revêtement inférieur 5. En revanche, les contacts à ressort 15 sortent de nouveau à l'épaulement du bloc de support 13 qui est formé à la transition avec l'appendice 22. Ils sont situés directement sur les électrodes 6 du revêtement supérieur 5 de la vitre centrale 2.

Dans une autre variante non représentée du chauffage à double couche, il est évidemment possible de disposer un revêtement 5 sur la surface inférieure de la vitre supérieure 4 (comme représenté dans la Figure 1) au lieu de le disposer sur la surface supérieure de la vitre centrale 2, et de réaliser son contact de manière correspondante à celle de la Figure 1.

Alors que dans la configuration de la Figure 1, un rayonnement thermique sensiblement identique est émis sur les deux côtés de l'élément en plaque (dans le cas d'une réalisation complètement symétrique, et donc avec une même puissance électrique pour les deux revêtements et les mêmes épaisseurs pour les deux vitres rigides), un autre agencement des revêtements dans le feuilleté permet d'obtenir un rayonnement asymétrique qui en cas de besoin pourrait être tout à fait souhaitable.

De même, d'autres combinaisons d'agencements de couches, éventuellement avec trois ou plusieurs couches chauffantes, ne sont pas hors de la portée de l'invention décrite ici.

## Revendications

1. Elément feuilleté en plaque (1) qui comporte au moins deux vitres rigides (2, 4) collées l'une à l'autre sur leur surface, en particulier des vitres de verre, qui sont chacune dotées sur toute la surface d'un revêtement (5) électriquement conducteur, qui peut être chauffé par application d'une tension électrique par l'intermédiaire d'électrodes (6), **caractérisé en ce que** l'une des deux vitres rigides est dotée dans une zone de raccordement d'une découpe (9) permettant de passer des raccordements électriques extérieurs (12, 14, 15) qui sont mis en contact avec les deux revêtements (5) par l'intermédiaire d'électrodes planes (6).

2. Elément feuilleté en plaque selon la revendication 1, **caractérisé en ce que** les deux surfaces tournées l'une vers l'autre des deux vitres rigides (2, 4) sont dotées des deux côtés de la couche d'adhésif (3) qui les relient de revêtements (5) électriquement conducteurs.

3. Elément feuilleté en plaque selon la revendication 1 ou 2, **caractérisé en ce qu'**il comprend au moins une troisième vitre rigide (20) reliée sur sa surface et **en ce qu'**au moins l'un des revêtements électriquement conducteurs (5) est prévu des deux côtés de la vitre rigide (4) centrale.

4. Elément feuilleté en plaque selon l'une quelconque des revendications précédentes, **caractérisé en ce que** les deux ou tous les revêtements (5) sont mis en contact électrique au moyen d'un dispositif de raccordement (10, 11, 12) disposé fixement dans la découpe (9).

5. Elément feuilleté en plaque selon l'une quelconque des revendications précédentes, **caractérisé en ce que** les deux ou tous les revêtements (5) peuvent être utilisés sélectivement individuellement, dans un circuit en série et/ou dans un circuit en parallèle.

6. Elément feuilleté en plaque selon l'une quelconque des revendications précédentes, **caractérisé en ce que** les revêtements (5) sont constitués du même matériau et/ou du même système de couche.

7. Elément feuilleté en plaque selon l'une quelconque des revendications 1 à 5, **caractérisé en ce que** les revêtements (5) sont constitués de matériaux et/ou de systèmes de couches différents.

8. Elément feuilleté en plaque selon l'une quelconque des revendications précédentes, **caractérisé en ce que** l'écoulement du courant dans au moins l'un des revêtements (5) est conduit chaque fois entre deux électrodes (6) disposées dans la zone de raccordement le long d'un parcours prédéterminé qui est créé par une division localement isolante du revêtement.

9. Elément feuilleté en plaque selon l'une quelconque des revendications précédentes, **caractérisé par** une sonde de température pour la détection d'une température effective des revêtements chauffants.

10. Elément feuilleté en plaque selon la revendication 9, **caractérisé par** un élément de commutation apte à être commandé par la sonde de température, pour l'interruption ou la réduction du courant de chauffage en cas de dépassement d'un seuil de température prédéterminé.

11. Elément feuilleté en plaque selon l'une quelconque des revendications précédentes, **caractérisé en ce qu'**au moins la zone de raccordement est recouverte visuellement par un masque.

12. Elément feuilleté en plaque selon la revendication 11, **caractérisé en ce que** le masque visuel est obtenu par utilisation d'une pâte de verre opaque pour la vitre précontrainte (2).

13. Elément feuilleté en plaque selon la revendication 11 ou 12, **caractérisé en ce que** le masque visuel est formé par un décor opaque (8).

14. Elément feuilleté en plaque selon la revendication 13, **caractérisé en ce que** le décor opaque (8) est disposé à plat entre la surface de la vitre (2) et le revêtement chauffant (5).

15. Elément feuilleté en plaque selon l'une quelconque des revendications précédentes, **caractérisé en ce que** les électrodes (6) sont réalisées par application et. cuisson d'une pâte électriquement conductrice de sérigraphie avant ou après le dépôt des revêtements chauffants (5).

16. Elément feuilleté en plaque selon la revendication 15, **caractérisé en ce que** les électrodes (6) sont réalisées sous la forme d'éléments décoratifs visibles.

17. Elément feuilleté en plaque selon l'une quelconque des revendications précédentes, **caractérisé en ce que** les revêtements sont reliés électriquement aux raccordements extérieurs au moyen de contacts électriques libérables, en particulier au moyen de contacts à ressort (14, 15).

## Claims

1. A plate element (1) with at least one rigid pane (2), in particular a pane of glass, which carries an electrically conductive coating (3) that heats by application of an electrical voltage via connectors (9, 10), and also an electrically conductive partial surface (5, 5T) electrically isolated from the coating and provided with at least one suitable electrical connector (5E), **characterized in that** the partial surface (5; 5T) is provided for connection to a ground potential.

2. The plate element as claimed in claim 1, in which the partial surface (5) deposited on the rigid pane (2) with the coating (3) is isolated from the coating (3) by means of at least one separating line (4).

3. The plate element as claimed in claim 2, **characterized in that** at least two mutually parallel separating lines (4) are provided and **in that** the neutral or free potential region (5) enclosed between said lines is divided into parts that are electrically isolated from one another.

4. The plate element as claimed in claim 1, in which the partial surface (5, 5T) is produced separately from the coating, in particular made of another material, and is deposited on the surface of the pane.

5. The plate element as claimed in any one of the preceding claims, in which the partial surface (5) lies on the outer edge of the pane (2) and in particular extends in the form of a frame around the heating surface.

6. The plate element as claimed in any one of the preceding claims, **characterized in that** the heating coating (3) is regulated as regards operation with the national mains voltage and **in that** the partial surface (5, 5T) is provided for connection to a grounded protective conductor, in particular a grounded conductor for protection from the mains voltage.

7. The plate element as claimed in any one of the preceding claims, **characterized in that** the coating (3) is formed by a layered system having a high thermal resistance, deposited on its surface before the pane (2) is toughened.

8. The plate element as claimed in any one of the preceding claims, **characterized in that** connectors for bringing the electrical heating voltage into the coating (3) and a connector connected to the partial surface (5) are grouped together locally in a connection region (8).

9. The plate element as claimed in claim 1 or 8, **characterized in that** at least one flat electrode (5E, 9, 10) is associated with each connector for electrically contacting the partial surface (5) and the coating (3).

10. The plate element as claimed in claim 9, **characterized in that** the electrodes (5E, 9, 10) are produced, before or after the heating coating (3) has been deposited, by applying and preferably baking an electrically conductive screen-printing paste.

11. The plate element as claimed in any one of the preceding claims, **characterized in that** another plate is laminated to the coated face of the rigid pane (2).

12. The plate element as claimed in any one of the preceding claims, **characterized in that** a spacing frame for an insulating glazing unit is bonded to the edge region of the coated surface of the pane (2), via which another rigid pane is firmly joined to the pane (2) bearing the coating.

13. The plate element as claimed in either of claims 11 and 12, **characterized in that** at least one recess is provided in one of the rigid plates joined to each other, in order to introduce the external electrical connectors for the plate element.

14. The plate element as claimed in claims 8 and 13, **characterized in that** the recess is provided in a spatial arrangement with the connection region (8).

15. The plate element as claimed in any one of the preceding claims, **characterized in that** at least the connection region (8) is concealed from view by means of a mask.

16. The plate element as claimed in claim 9, **characterized in that** the flat electrodes form visible decorative elements.

17. The plate element as claimed in any one of the preceding claims, **characterized in that** it is used in glazing for windows, or in mirrors, or in domestic electrical appliances requiring production of surface heat.

## Patentansprüche

1. Verbund-Plattenelement (1) mit mindestens zwei flächig miteinander verklebten starren Scheiben (2, 4), insbesondere Glasscheiben, die jeweils mit einer elektrisch leitfähigen, durch Anlegen einer elektrischen Spannung über Elektroden (6) beheizbaren vollflächigen Beschichtung (5) versehen sind, **dadurch gekennzeichnet, dass** eine der beiden starren Scheiben in einem Anschlussbereich mit einer Ausnehmung (9) zum Durchführen von elektrischen Außenanschlüssen (12, 14, 15) versehen ist, die mit beiden Beschichtungen (5) mittels flacher Elektroden (6) kontaktiert sind.

2. Verbund-Plattenelement nach Anspruch 1, **dadurch gekennzeichnet, dass** die beiden einander zugewandten Flächen zweier starrer Scheiben (2, 4) beidseits der sie verbindenden Klebeschicht (3) mit den elektrisch leitfähigen Beschichtungen (5) versehen sind.

3. Verbund-Plattenelement nach Anspruch 1 oder 2, **dadurch gekennzeichnet, dass** es mindestens eine dritte flächig verbundene starre Scheibe (20) umfasst, und dass beidseits der mittleren starren Scheibe (4) mindestens eine der elektrisch leitfähigen Beschichtungen (5) vorgesehen ist.

4. Verbund-Plattenelement nach einem der vorstehenden Ansprüche, **dadurch gekennzeichnet, dass** beide oder alle Beschichtungen (5) mittels einer in der Ausnehmung (9) fest angeordneten Anschlusseinrichtung (10, 11, 12) elektrisch kontaktiert sind.

5. Verbund-Plattenelement nach einem der vorstehenden Ansprüche, **dadurch gekennzeichnet, dass** beide oder alle Beschichtungen (5) wahlweise einzeln, in Reihenschaltung und/ oder in Parallelschaltung betreibbar sind.

6. Verbund-Plattenelement nach einem der vorstehenden Ansprüche, **dadurch gekennzeichnet, dass** die Beschichtungen (5) aus demselben Material und/oder Schichtsystem bestehen.

7. Verbund-Plattenelement nach einem der vorstehenden Ansprüche 1 bis 5, **dadurch gekennzeichnet, dass** die Beschichtungen (5) aus unterschiedlichen Materialien und/oder Schichtsystemen bestehen.

8. Verbund-Plattenelement nach einem der vorstehenden Ansprüche, **dadurch gekennzeichnet, dass** der Stromfluss in mindestens einer der Beschichtungen (5) zwischen je zwei in dem Anschlussbereich angeordneten Elektroden (6) entlang einem vorgegebenen Verlauf geleitet wird, der durch lokales isolierendes Unterteilen der Beschichtung erzeugt ist.

9. Verbund-Plattenelement nach einem der vorstehenden Ansprüche, **gekennzeichnet durch** einen Temperaturfühler zum Erfassen einer Isttemperatur der heizbaren Beschichtungen.

10. Verbund-Plattenelement nach Anspruch 9, **gekennzeichnet durch** ein von dem Temperaturfühler steuerbares Schaltelement zum Unterbrechen oder Reduzieren des Heizstroms bei Überschreiten einer vorgegebenen Temperaturschwelle.

11. Verbund-Plattenelement nach einem der vorstehenden Ansprüche, **dadurch gekennzeichnet, dass** zumindest der Anschlussbereich mithilfe einer Kaschierung optisch verdeckt ist.

12. Verbund-Plattenelement nach Anspruch 11, **dadurch gekennzeichnet, dass** die optische Kaschierung durch Verwendung einer opaken Glasmasse für die vorgespannte Glasscheibe (2) erreicht wird.

13. Verbund-Plattenelement nach Anspruch 11 oder 12, **dadurch gekennzeichnet, dass** die optische Kaschierung durch ein opakes Dekor (8) gebildet ist.

14. Verbund-Plattenelement nach Anspruch 13, **dadurch gekennzeichnet, dass** das opake Dekor (8) flächig zwischen der Oberfläche der Glasscheibe (2) und der beheizbaren Beschichtung (5) angeordnet ist.

15. Verbund-Plattenelement nach einem der vorstehenden Ansprüche, **dadurch gekennzeichnet, dass** die Elektroden (6) vor oder nach dem Abscheiden der beheizbaren Beschichtungen (5) durch Auftragen und Einbrennen einer elektrisch leitfähigen Siebdruckpaste hergestellt werden.

16. Verbund-Plattenelement nach Anspruch 15, **dadurch gekennzeichnet, dass** die Elektroden (6) als sichtbare, dekorative Elemente ausgeführt sind.

17. Verbund-Plattenelement nach einem der vorstehenden Ansprüche, **dadurch gekennzeichnet, dass** die Beschichtungen mithilfe lösbarer elektrischer Kontakte, insbesondere mittels Federkontakten (14, 15) elektrisch mit den Außenanschlüssen verbunden sind.
